# EUROPÄISCHE PATENTANMELDUNG

(11) **EP 4 451 209 A1**
(43) Veröffentlichungstag der Anmeldung: **23.10.2024**
(21) Anmeldenummer: 24164917.7
(22) Anmeldetag: 20.03.2024
(51) Int. Cl.: G06T 7/00, G01B 11/22, G01B 11/24

(54) **VERFAHREN ZUR VERMESSUNG VON OBERFLÄCHENSTRUKTUREN EINES FAHRZEUGREIFENS**

(30) Priorität: 20.04.2023 DE 102023203617
(71) Anmelder: Continental Reifen Deutschland GmbH, 30175 Hannover (DE)
(72) Erfinder: Großkreutz, Holger, 30175 Hannover (DE); Pietsch, Holger, 30175 Hannover (DE); Fricke, Lukas, 30175 Hannover (DE); Voelker, Bert, 30175 Hannover (DE); Strzelczyk, Matthias, 30175 Hannover (DE); Dixo, Eduardo, 4760-606 Lousado (PT); Ferreira Lopes, Daniel Pedro, 4760-606 Lousado (PT)
(74) Vertreter: Continental Corporation

(57) **Zusammenfassung**

Die Erfindung betrifft ein Verfahren zur Vermessung von Oberflächenstrukturen eines Fahrzeugreifens (1), umfassend die folgenden Schritte:
- Aufnehmen eines Bildes eines Oberflächensegments eines Fahrzeugreifens (1) mit Hilfe eines 3D-Sensors,
- Generieren einer dreidimensionalen Punktwolke aus den erfassten Bildpunkten,
- Identifizieren der Lage der Rotationsachse (2) des Fahrzeugreifens (1) aus den Punkten P der Punktwolke, indem ein Richtungsvektor und ein Ortsvektor der Rotationsachse (2) bestimmt wird,
- Transformieren der Koordinaten von Punkten P der Punktwolke von dem durch die Position des 3D-Sensors gegebenen Koordinatensystem in ein Koordinatensystem, welches gegeben ist durch den normierten Normalenvektor *e1(P)* im Punkt P, den normierten Richtungsvektor e2(P) der Rotationsachse (2) sowie einen auf diesen beiden Vektoren senkrecht stehenden Einheitsvektor e3(P),
- Durchführen von lateralen und/oder longitudinalen Schnitten für Punkte P der Punktwolke,
- Ableiten von Oberflächenstrukturinformationen aus eindimensionalen Funktionen in den sich ergebenden Schnittebenen (3, 4).

## Beschreibung

Die vorliegende Erfindung betrifft ein Verfahren zur Vermessung von Oberflächenstrukturen eines Fahrzeugreifens.

Fahrzeugreifen weisen auf ihrer Lauffläche eine als Reifenprofil bezeichnete, aus Rillen und Lamellen ausgebildete Oberflächenstruktur auf, welche von entscheidender Bedeutung für die Sicherheit im Straßenverkehr ist. Die Profilrillen sind dabei insbesondere in der Lage, Feuchtigkeit aufzunehmen und abzuleiten, so dass auch bei Schnee und Regen eine gute Bodenhaftung gegeben ist. Unter der Tiefe einer Profilrille wird im Allgemeinen der Abstand der Laufflächenebene zum Grund der Profilrille verstanden. Die Mindesttiefe der Profilrillen ist gesetzlich vorgeschrieben. Durch Abrieb nimmt die tatsächliche Profiltiefe eines Fahrzeugreifens im Laufe seiner Nutzung ab, so dass das Profil regelmäßig überprüft und ein Fahrzeugreifen gegebenenfalls ausgetauscht werden muss, wenn die Profiltiefe die Anforderungen nicht mehr erfüllt.

Die Überprüfung der Profiltiefe kann in Autowerkstätten, aber auch von Fahrzeugnutzern selbst durchgeführt werden, beispielsweise mithilfe von mechanischen oder digitalen Profiltiefenmessern, bei denen eine Spitze in die zu vermessende Profilrille eingeführt wird und der Tiefenwert auf einer analogen Skala oder digital abgelesen werden kann.

Da der Abrieb eines Fahrzeugreifens sowohl über die Breite des Reifens als auch in Laufrichtung variieren kann, sind in der Regel Profiltiefenmessungen an verschiedenen Positionen des Reifens erforderlich, um eine verlässliche Aussage über den Zustand des Reifenprofils zu erhalten. Dieses Vorgehen ist zeitaufwändig und insbesondere bei Durchführung durch Laien fehleranfällig.

Neben der Überprüfung der Profiltiefe mit Hilfe von Profiltiefenmessern sind auch bereits Verfahren bekannt, bei denen ein von einem Segment der Oberfläche eines Fahrzeugreifens aufgenommenes Bild im Hinblick auf die Profiltiefe analysiert wird.

Dabei wird beispielsweise zu einer aus dem aufgenommenen Bild generierten Punktwolke die konvexe Hülle gebildet und nachfolgend für jeden Punkt der Punktwolke der Abstand zu der konvexen Hülle bestimmt. Auf diese Weise lassen sich die Rillen innerhalb des Profils identifizieren und es können den einzelnen Rillen Tiefenwerte zugeordnet werden.

Es ist ein Nachteil dieses Verfahrens, dass es sehr rechen- und damit zeitintensiv ist, insbesondere, je größer das zu analysierende Oberflächensegment ausgewählt wird.

Die Aufgabe der vorliegenden Erfindung ist es, ein Verfahren zur Vermessung von Oberflächenstrukturen eines Fahrzeugreifens bereitzustellen, welches auf einfache Weise eine schnelle und zuverlässige Einschätzung der Profiltiefen eines Fahrzeugreifens, insbesondere auch durch Laien, ermöglicht.

Zur Lösung der gestellten Aufgabe wird ein Verfahren mit den Merkmalen des Patentanspruchs 1 vorgeschlagen.

Vorteilhafte Ausgestaltungen und Weiterbildungen der Erfindung sind Gegenstand der abhängigen Ansprüche.

Gemäß Patentanspruch 1 handelt es sich bei der Erfindung um ein Verfahren zur Vermessung von Oberflächenstrukturen eines Fahrzeugreifens, umfassend die folgenden Schritte:
- Aufnehmen eines Bildes eines Oberflächensegments eines Fahrzeugreifens mit Hilfe eines 3D-Sensors,
- Generieren einer dreidimensionalen Punktwolke aus den von dem 3D-Sensor erfassten Bildpunkten des Oberflächensegments,
- Identifizieren der Lage der Rotationsachse des Fahrzeugreifens aus den Punkten der Punktwolke, indem ein Richtungsvektor *r_{R}* und ein Ortsvektor *p_{R}* der Rotationsachse bestimmt wird, wobei der Richtungsvektor *r_{R}* der Rotationsachse ermittelt wird, indem jedem Punkt P der Punktwolke ein Normalenvektor *n* zugeordnet wird und für einen angenommenen Richtungsvektor *r* die Summe seiner Skalarprodukte mit allen Normalenvektoren *n* gebildet wird, wobei der Richtungsvektor *r_{R}* der Rotationsachse als derjenige Richtungsvektor *r* bestimmt wird, für den bei Variation des Richtungsvektors *r* die Summe der Skalarprodukte minimal wird, und wobei ein Ortsvektor *p_{R}* der Rotationsachse als ein Vektor *p* bestimmt wird, für den die Summe der Abstände zwischen den den Punkten der Punktwolke zugeordneten Normalenvektoren *n* und den Abstandvektoren *v_{dist}* dieser Punkte zur Rotationsachse minimal wird,

- Transformieren der Koordinaten von Punkten P der Punktwolke von dem durch die Position des 3D-Sensors gegebenen Koordinatensystem in ein Koordinatensystem, welches gegeben ist durch den normierten Normalenvektor *e1(P)* im Punkt P, den normierten Richtungsvektor *e2(P)* der Rotationsachse sowie einen auf diesen beiden Vektoren senkrecht stehenden Einheitsvektor *e3(P),*
- Durchführen von lateralen und/oder longitudinalen Schnitten für Punkte der Punktwolke,
- Ableiten von Oberflächenstrukturinformationen aus eindimensionalen Funktionen in den sich ergebenden Schnittebenen.

Mit anderen Worten handelt es sich bei der Erfindung grundsätzlich um ein Verfahren, bei dem die Profiltiefe eines Fahrzeugreifens anhand des Abstands von Punkten auf der Oberfläche des Fahrzeugreifens zur Rotationsachse des Fahrzeugreifens bestimmt wird. Damit grenzt sich das Verfahren von bekannten rechenintensiven Verfahren ab, bei denen die Profiltiefe über den Abstand von Punkten auf der Reifenoberfläche zu einer an die Reifenoberfläche angefitteten konvexen Hülle bestimmt wird. Das erfindungsgemäße Verfahren ist unabhängig von der konvexen Hülle. Wesentlich für das erfindungsgemäße Verfahren ist vielmehr die zuverlässige Bestimmung der Lage der Rotationsachse des untersuchten Fahrzeugreifens.

Es sind grundsätzlich unter dem Oberbegriff "cylinder fitting" bereits Verfahren bekannt, bei denen aus Punktwolkendaten eines zylinderförmigen Objekts auf die Lage der Zylinderachse geschlossen wird. Diese Verfahren basieren im Wesentlichen auf dem RANSAC-Algorithmus, welcher jedoch für die hier beschriebenen Anwendungen der Oberflächenstrukturuntersuchung und Profiltiefenbestimmung zu ungenaue und zu wenig reproduzierbare Ergebnisse liefert. Das erfindungsgemäße Verfahren zeichnet sich durch die Verwendung eines Algorithmus aus, welcher eine besonders schnelle und zuverlässige Bestimmung der Lage der Rotationsachse des Fahrzeugreifens aus den Punkten der Punktwolke erlaubt.

Das erfindungsgemäße Verfahren sieht vor, dass zunächst ein Bild eines Oberflächensegments des Fahrzeugreifens aufgenommen wird, wobei hierzu ein 3D-Sensor eingesetzt wird. Anschließend wird aus den von dem 3D-Sensor erfassten Bildpunkten des Oberflächensegments eine dreidimensionale Punktwolke generiert.

In einem nachfolgenden Verfahrensschritt ist die Lage der Rotationsachse des Fahrzeugreifens aus den Punkten der Punktwolke zu identifizieren, indem ein Richtungsvektor *r_{R}* und ein Ortsvektor *p_{R}* der Rotationsachse bestimmt wird.

Als Hilfsmittel zur Bestimmung des Richtungs- und des Ortsvektors nutzt das erfindungsgemäße Verfahren die Eigenschaften der Normalenvektoren *n*, die sich jedem Punkt P der Punktwolke zuordnen lassen, indem sie auf an sich bekannte Art und Weise unter Zuhilfenahme der in einer definierten Nachbarschaft des Punktes P liegenden Punkte der Punktwolke bestimmt werden. Die Normalenvektoren *n* derjenigen Punkte, die auf der im Wesentlichen konvexen Oberfläche des Fahrzeugreifens außerhalb etwaiger Profilrinnen liegen, werden im Folgenden auch als gute Oberflächennormalen bezeichnet. Diese guten Oberflächennormalen sind orthogonal zur Rotationsachse, so dass das Skalarprodukt aus dem Richtungsvektor der Rotationsachse und einer guten Oberflächennormalen stets Null ist.

Der Richtungsvektor *r_{R}* der Rotationsachse wird nun ermittelt, indem zunächst für einen angenommenen Richtungsvektor *r* die Summe seiner Skalarprodukte mit allen Normalenvektoren *n* gebildet wird. Durch systematische Variation des Richtungsvektors *r* kann schließlich der Richtungsvektor *r_{R}* der Rotationsachse als derjenige Richtungsvektor *r* bestimmt werden, für den die Summe der Skalarprodukte minimal wird. Formal erfolgt die Minimierung der entsprechenden Zielfunktion beispielsweise über eine Nonlinear-Least-Squares-Fitting-Methode.

Zur Bestimmung eines Ortsvektors *p_{R}* der Rotationsachse nutzt man die Tatsache aus, dass für einen Punkt P mit einer guten Oberflächennormalen der Abstandsvektor *v_{dist}* von der Rotationsachse zu dem Punkt P und der dem Punkt P zugeordnete Normalenvektor *n* parallel sind. Mit anderen Worten ist der zwischen dem Abstandsvektor *v_{dist}* und dem Normalenvektor *n* eingeschlossene Winkel und damit der Abstand zwischen diesen beiden Vektoren Null. Indem nun unter Zugrundelegung des bereits bekannten Richtungsvektors *r_{R}* der Ortsvektor *p* und damit die potentielle Lage der Rotationsachse variiert wird und für eine Menge von Punkten auf der Oberfläche des Fahrzeugreifens die Summe der Abstände zwischen den zugeordneten Normalenvektoren *n* und den Abstandvektoren *v_{dist}* gebildet wird, kann ein Ortsvektor *p_{R}* der Rotationsachse als derjenige Vektor *p* bestimmt werden, für den die Summe dieser Abstände minimal ist. Auch hier kann die Minimierung der entsprechenden Zielfunktion mittels eines Nonlinear-Least-Squares-Fittings erfolgen.

Sobald der Richtungsvektor *r_{R}* und ein Ortsvektor *p_{R}* der Rotationsachse bekannt sind, liegt die Rotationsachse eindeutig fest.

In einem nachfolgenden Verfahrensschritt wird für eine Anzahl von Punkten P der Punktwolke eine Koordinatentransformation von dem zufällig durch die Position des 3D-Sensors vorgegebenen Koordinatensystem in ein durch die drei Einheitsvektoren e1(P), e2(P), e3(P) aufgespanntes Koordinatensystem durchgeführt, wobei der Vektor e1(P) der normierte Normalenvektor im Punkt P ist, der Vektor e2(P) der normierte Richtungsvektor der Rotationsachse ist und der Vektor e3(P) der zu diesen beiden Vektoren senkrecht stehende Vektor ist, welcher sich als das Kreuzprodukt der Vektoren e1(P) und e2(P) ergibt. Die Koordinatentransformation kann grundsätzlich für alle Punkte P der Punktwolke durchgeführt werden. In Abhängigkeit von der geforderten Auflösung ist es im Allgemeinen aber ausreichend, die Koordinatentransformation lediglich für eine Teilmenge von Punkten P durchzuführen, beispielsweise für eine frei zu wählende Anzahl von äquidistanten Punkten P entlang eines Schnitts in Längsrichtung des Reifens.

Innerhalb jedes dieser neuen Koordinatensysteme können nun für ausgesuchte Punkte der Punktwolke Schnitte in lateraler Richtung, d.h. in Breitenrichtung des Fahrzeugreifens, und/oder in longitudinaler Richtung, d.h. in Laufrichtung des Fahrzeugreifens, durchgeführt werden. Eine Schnittebene in lateraler Richtung wird dabei von den beiden Vektoren e1(P) und e2(P) aufgespannt, eine Schnittebene in longitudinaler Richtung wird von den beiden Vektoren e1(P) und e3(P) aufgespannt. In den Schnittebenen lassen sich die gesuchten Oberflächenstrukturinformationen schließlich aus eindimensionalen Funktionen ableiten.

Das erfindungsgemäße Verfahren erlaubt aufgrund des speziellen Algorithmus zur Bestimmung der Lage der Rotationsachse des Fahrzeugreifens aus den Punkten der Punktwolke eine besonders schnelle und zuverlässige Analyse von aufgenommenen Bildern von Oberflächensegmenten eines Fahrzeugreifens im Hinblick auf die Oberflächenstrukturen, insbesondere auf die Profiltiefe.

Neben der Bestimmung der Profiltiefe in einzelnen Bereichen des Fahrzeugreifens ist durch Vergleich mehrerer Werte entlang der Breite des Fahrzeugreifens und/oder in Laufrichtung des Fahrzeugreifens insbesondere auch ein Rückschluss auf ungleichmäßigen Abrieb möglich, wie er beispielsweise in Laufrichtung durch eine Vollbremsung oder in lateraler Richtung durch Fehleinstellungen der Achse hervorgerufen werden kann.

Gemäß einer bevorzugten Ausführung des erfindungsgemäßen Verfahrens wird als 3D-Sensor eine Gesichtskamera eines Smartphones verwendet. Auf diese Weise ist es auch für Laien auf einfache Weise möglich, ein Bild eines Oberflächensegments eines Fahrzeugreifens aufzunehmen und dieses mit entsprechender Software gemäß dem erfindungsgemäßen Verfahren auszuwerten.

Alternativ zu einer Smartphonekamera können auch andere 3D-Sensoren zum Einsatz kommen, beispielsweise ein 3D-Laserscanner.

Grundsätzlich kann das aufgenommene Bild für die weitere Bearbeitung und Auswertung einer Auswerteeinheit zugeführt werden. Dabei kann es sich um eine von dem 3D-Sensor räumlich getrennte, externe Auswerteeinheit handeln, der das aufgenommene Bild kabelgebunden oder kabellos übermittelt wird. An die externe Auswerteeinheit kann ein Display angebunden sein, über welches einem Nutzer mindestens ein Ergebnis der Auswertung angezeigt wird. Dabei kann es sich beispielsweise um ermittelte Profiltiefenwerte handeln, die ein Nutzer mit vorgegebenen Referenzwerten vergleichen kann. Bei den auf dem Display angezeigten Informationen kann es sich auch um Handlungsanweisungen an den Nutzer handeln, beispielsweise in der Form, dass der Nutzer aufgefordert wird, den vermessenen Fahrzeugreifen auszutauschen, das Fahrzeug in einer Werkstatt vorzustellen oder Bilder von weiteren Oberflächensegmenten des Fahrzeugreifens aufzunehmen, um ein detaillierteres Bild vom Zustand des Fahrzeugreifens zu erhalten.

Gemäß einer Ausführungsvariante des erfindungsgemäßen Verfahrens erfolgt die Auswertung des mit der Gesichtskamera eines Smartphones aufgenommenen Bildes unmittelbar auf dem Smartphone. Hierzu ist das Smartphone mit einer oder mehreren Apps ausgerüstet, die die Generierung einer dreidimensionalen Punktwolke aus den von der Smartphonekamera erfassten Bildpunkten des Oberflächensegments sowie eine nachfolgende Auswertung der in der Punktwolke enthaltenen Daten entsprechend dem erfindungsgemäßen Verfahren ermöglichen.

Es kann erfindungsgemäß vorgesehen sein, dass mindestens ein Ergebnis der Auswertung unmittelbar auf dem Display des Smartphones angezeigt wird. Wie oben für Displays im Allgemeinen bereits beschrieben, kann es sich dabei beispielsweise um ermittelte Profiltiefenwerte handeln, die ein Nutzer mit vorgegebenen Referenzwerten vergleichen kann. Bei den auf dem Display des Smartphones angezeigten Informationen kann es sich auch um Handlungsanweisungen an den Nutzer handeln, beispielsweise in der Form, dass der Nutzer aufgefordert wird, den vermessenen Fahrzeugreifen auszutauschen, das Fahrzeug in einer Werkstatt vorzustellen oder Bilder von weiteren Oberflächensegmenten des Fahrzeugreifens aufzunehmen, um ein detaillierteres Bild vom Zustand des Fahrzeugreifens zu erhalten.

Gemäß einer Ausführungsform der Erfindung befindet sich der zu vermessende Fahrzeugreifen während der Durchführung des Verfahrens im montierten Zustand an einem Fahrzeug. Mit anderen Worten wird ein Bild eines Oberflächensegments des Fahrzeugreifens aufgenommen, während der Fahrzeugreifen an einem Fahrzeug montiert ist. Es ist nicht erforderlich, dass der Fahrzeugreifen für die auf dem erfindungsgemäßen Verfahren basierenden Untersuchungen demontiert wird. Aus diesem Grund ist das erfindungsgemäße Verfahren in besonderer Weise zur Anwendung durch Laien, beispielsweise einen Fahrzeugnutzer, geeignet. Durch Aufnahme eines einzelnen Bildes eines zugänglichen Oberflächensegments des Fahrzeugreifens mit Hilfe einer Smartphonekamera und nachfolgende Auswertung der aufgenommenen Daten mit Hilfe einer auf dem erfindungsgemäßen Verfahren basierenden und auf dem Smartphone vorgehaltenen App kann der Nutzer auf einfache Art und Weise eine Rückmeldung über den aktuellen Zustand des Fahrzeugreifens, insbesondere des Reifenprofils, erhalten und gegebenenfalls erforderliche Maßnahmen einleiten wie das Austauschen eines Fahrzeugreifens.

Gleichwohl ist es selbstverständlich auch möglich, das erfindungsgemäße Verfahren an einem demontierten Fahrzeugreifen durchzuführen. Bei einem demontierten Fahrzeugreifen sind sämtliche Bereiche seiner Oberfläche gleichermaßen gut zugänglich und durch Unterteilung der gesamten Oberfläche des Fahrzeugreifens in einzelne Oberflächensegmente und Durchführung des erfindungsgemäßen Verfahrens für eine Vielzahl oder jedes dieser Oberflächensegmente kann bei einem demontierten Fahrzeugreifen grundsätzlich die gesamte Oberfläche des Fahrzeugreifens vermessen werden, wodurch beispielsweise lokale Unregelmäßigkeiten im Reifenabrieb besonders gut sichtbar werden.

Gemäß einem weiteren Aspekt betrifft die Erfindung ein Computerprogrammprodukt, das Codeanweisungen erhält, um die Schritte des beschriebenen Verfahrens auszuführen, wenn es auf einer Recheneinheit ausgeführt wird.

Im Folgenden wird die Erfindung anhand eines Ausführungsbeispiels und unter Bezugnahme auf die beigefügten Figuren näher erläutert. Es zeigt:
- Figur 1:: ein Ablaufdiagramm eines Verfahrens zur Vermessung von Oberflächenstrukturen eines Fahrzeugreifens.
- Figur 2:: eine schematische Ansicht eines Fahrzeugreifens einschließlich der für das erfindungsgemäße Verfahren maßgeblichen geometrischen Parameter;
- Figur 3:: Darstellung der Einheitsvektoren e1(P1), e2(P1) und e3(P1) für den Punkt P1 aus Figur 2;
- Figur 4:: eine Darstellung eines beispielhaften lateralen Schnitts zur Bestimmung der Profiltiefen.

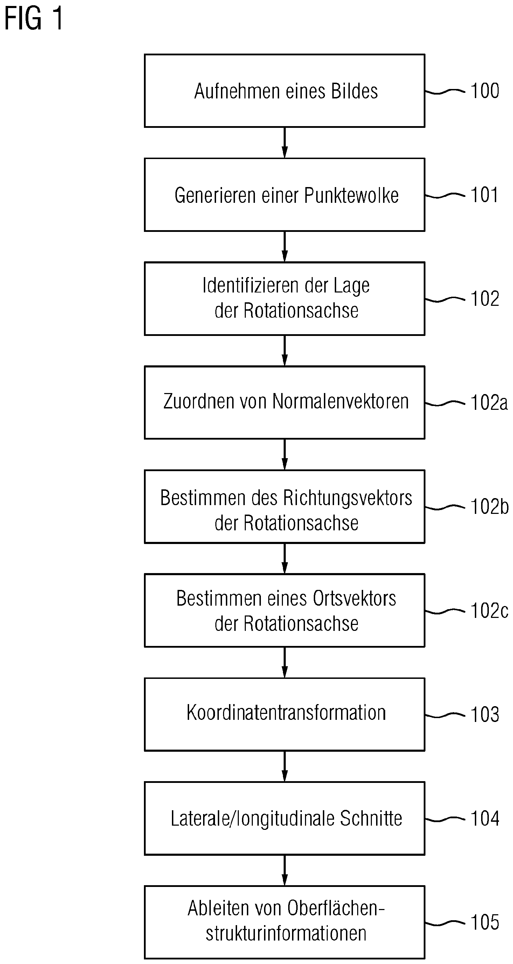

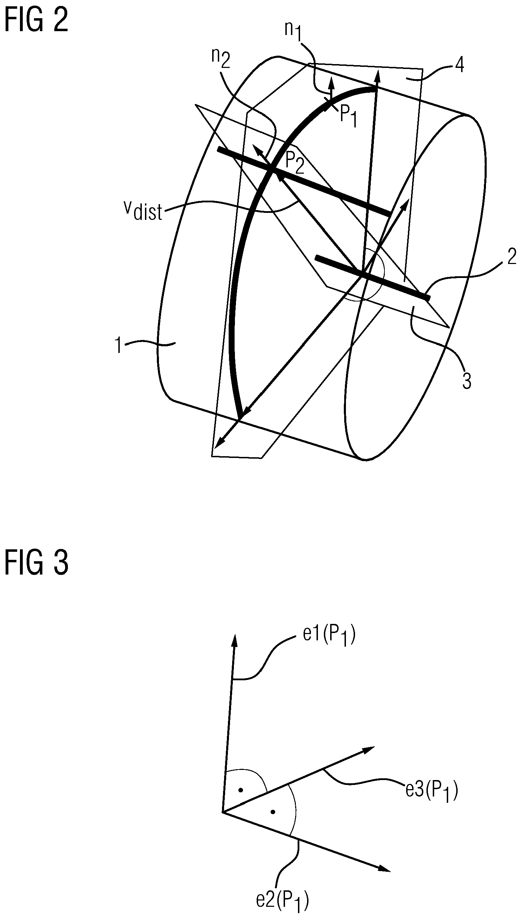

Figur 1 zeigt ein Ablaufdiagramm eines Verfahrens zur Vermessung von Oberflächenstrukturen eines Fahrzeugreifens 1, Figur 2 zeigt einen Fahrzeugreifen 1 in schematischer Ansicht einschließlich der für das erfindungsgemäße Verfahren maßgeblichen geometrischen Parameter.

In einem Schritt 100 wird zunächst ein Bild eines Oberflächensegments eines zu vermessenden Fahrzeugreifens 1 mit Hilfe eines 3D-Sensors, beispielsweise mit der Gesichtskamera eines Smartphones, aufgenommen.

In einem Schritt 101 wird aus den von dem 3D-Sensor erfassten Bildpunkten des Oberflächensegments eine dreidimensionale Punktwolke generiert.

In einem nachfolgenden Verfahrensschritt 102 wird die Lage der Rotationsachse 2 des Fahrzeugreifens 1 aus den Punkten der Punktwolke ermittelt. Hierzu sind ein Richtungsvektor *r_{R}* und ein Ortsvektor *p_{R}* der Rotationsachse 2 zu bestimmen, wozu das Verfahren Hilfsschritte 102a, 102b und 102c umfasst.

In einem ersten Hilfsschritt 102a wird jedem Punkt der Punktwolke ein Normalenvektor *n* zugeordnet. In einem nachfolgenden Hilfsschritt 102b wird der Richtungsvektor *r_{R}* der Rotationsachse 2 bestimmt, indem zunächst für einen angenommenen Richtungsvektor *r* die Summe seiner Skalarprodukte mit allen Normalenvektoren *n* gebildet wird. Durch systematische Variation des Richtungsvektors *r* kann der Richtungsvektor *r_{R}* der Rotationsachse 2 als derjenige Richtungsvektor *r* bestimmt werden, für den die Summe der Skalarprodukte minimal wird. In einem weiteren Hilfsschritt 102c wird schließlich ein Ortsvektor *p_{R}* der Rotationsachse 2 ermittelt, indem unter Zugrundelegung des bereits bekannten Richtungsvektors *r_{R}* der Ortsvektor *p_{R}* als ein Vektor bestimmt wird, für den die Summer der Abstände zwischen den den Punkten der Punktwolke zugeordneten Normalenvektoren *n* und den Abstandsvektoren *v_{dist}* dieser Punkte zur Rotationsachse minimal wird.

Sobald die Lage der Rotationsachse 2 durch Benennung eines Richtungsvektors *r_{R}* und eines Ortsvektors *p_{R}* bekannt ist, erfolgt in einem nachfolgenden Schritt 103 des Verfahrens eine Transformation der Koordinaten einer Anzahl von Punkten P der Punktwolke von dem durch die Position des 3D-Sensors gegebenen Koordinatensystem in ein Koordinatensystem, welches gegeben ist durch den normierten Normalenvektor e1(P) im Punkt P, den normierten Richtungsvektor e2(P) der Rotationsachse sowie einen auf diesen beiden Vektoren senkrecht stehenden Einheitsvektor e3(P).

In einem Schritt 104 können anschließend innerhalb jedes dieser neuen Koordinatensysteme für ausgesuchte Punkte der Punktwolke Schnitte in lateraler Richtung, d.h. in Breitenrichtung des Fahrzeugreifens 1, und/oder in longitudinaler Richtung, d.h. in Laufrichtung des Fahrzeugreifens 1, durchgeführt werden. Eine Schnittebene in lateraler Richtung wird dabei von den beiden Vektoren e1(P) und e2(P) aufgespannt, eine Schnittebene in longitudinaler Richtung wird von den beiden Vektoren e1(P) und e3(P) aufgespannt.

In den Schnittebenen lassen sich die gesuchten Oberflächenstrukturinformationen abschließend in einem Schritt 105 aus eindimensionalen Funktionen ableiten. Insbesondere können Informationen über die Profiltiefe des Reifenprofils sowie Hinweise auf unregelmäßigen Reifenabrieb abgeleitet werden.

Anhand der Figur 2 werden im Folgenden die für das erfindungsgemäße Verfahren maßgeblichen geometrischen Parameter genauer erläutert. Das erfindungsgemäße Verfahren ermöglicht die Bestimmung der Lage der Rotationsachse 2 des Fahrzeugreifens 1 aus den Punkten der Punktwolke eines von einem Oberflächensegment des Fahrzeugreifens 1 aufgenommenen Bildes und in der Folge die Bestimmung von Profiltiefenwerten.

Zur Bestimmung der Lage der Rotationsachse 2 des Fahrzeugreifens 1 aus den Punkten der Punktwolke ist ein Richtungsvektor *r_{R}* und ein Ortsvektor *p_{R}* der Rotationsachse 2 zu bestimmen.

Als Hilfsmittel zur Bestimmung des Richtungs- und des Ortsvektors der Rotationsachse 2 wird jedem Punkt der Punktwolke ein Normalenvektor *n* zugeordnet. Exemplarisch sind in Figur 2 für zwei Punkte P₁ und P₂ die zugehörigen Normalenvektoren n1 und n₂ eingezeichnet. Die Normalenvektoren n derjenigen Punkte P, die auf der im Wesentlichen konvexen Oberfläche des Fahrzeugreifens 1 außerhalb etwaiger Profilrinnen liegen, werden auch als gute Oberflächennormalen bezeichnet. Diese guten Oberflächennormalen sind orthogonal zur Rotationsachse 2, so dass das Skalarprodukt aus dem Richtungsvektor *r_{R}* der Rotationsachse 2 und einer guten Oberflächennormalen *n* stets Null ist.

Der Richtungsvektor *r_{R}* der Rotationsachse 2 wird ermittelt, indem zunächst für einen angenommenen Richtungsvektor *r* die Summe seiner Skalarprodukte mit allen Normalenvektoren *n* gebildet wird. Durch systematische Variation des Richtungsvektors *r* kann schließlich der Richtungsvektor *r_{R}* der Rotationsachse 2 als derjenige Richtungsvektor *r* bestimmt werden, für den die Summe der Skalarprodukte minimal wird, beispielsweise über ein Nonlinear-Least-Squares-Fitting.

Zur Bestimmung eines Ortsvektors *p_{R}* der Rotationsachse 2 nutzt man die Tatsache aus, dass für einen Punkt P mit einer guten Oberflächennormalen *n* der Abstandsvektor *v_{dist}* von der Rotationsachse zu dem Punkt P und der dem Punkt P zugeordnete Normalenvektor *n* parallel sind. Der Abstandsvektor *v_{dist}* ist in Figur 2 exemplarisch für einen Punkt P₂ eingezeichnet. Mit anderen Worten ist der zwischen dem Abstandsvektor *v_{dist}* und dem Normalenvektor *n* eingeschlossene Winkel und damit der Abstand zwischen diesen beiden Vektoren Null. Indem nun unter Zugrundelegung des bereits bekannten Richtungsvektors *r_{R}* der Ortsvektor *p* und damit die potentielle Lage der Rotationsachse 2 variiert wird und für eine Menge von Punkten auf der Oberfläche des Fahrzeugreifens 1 die Summe der Abstände zwischen den zugeordneten Normalenvektoren *n* und den Abstandvektoren *v_{dist}* gebildet wird, kann, beispielsweise mit Hilfe eines Nonlinear-Least-Squares-Fittings, ein Ortsvektor *p_{R}* der Rotationsachse 2 als derjenige Vektor *p* bestimmt werden, für den die Summe dieser Abstände minimal ist.

Sobald der Richtungsvektor *r_{R}* und ein Ortsvektor *p_{R}* der Rotationsachse 2 bekannt sind, liegt die Rotationsachse 2 eindeutig fest.

Im Anschluss wird für eine Anzahl von Punkten P der Punktwolke eine Koordinatentransformation von dem zufällig durch die Position des 3D-Sensors vorgegebenen Koordinatensystem in ein durch die drei Einheitsvektoren e1(P), e2(P), e3(P) aufgespanntes Koordinatensystem durchgeführt, wobei der Vektor e1(P) der normierte Normalenvektor im Punkt P ist, der Vektor e2(P) der normierte Richtungsvektor der Rotationsachse ist und der Vektor e3(P) der zu diesen beiden Vektoren senkrecht stehende Vektor ist, welcher sich als das Kreuzprodukt der Vektoren e1(P) und e2(P) ergibt. Für den Punkt P1 aus Figur 2 sind die drei Einheitsvektoren e1(P1), e2(P1) und e3(P1) exemplarisch in Figur 3 dargestellt. Aus Gründen der Übersichtlichkeit sind sie nicht innerhalb der Figur 2 sondern in einer separaten Figur 3 dargestellt.

Die Koordinatentransformation kann grundsätzlich für alle Punkte P der Punktwolke durchgeführt werden. In Abhängigkeit von der geforderten Auflösung ist es im Allgemeinen aber ausreichend, die Koordinatentransformation lediglich für eine Teilmenge von Punkten P durchzuführen, beispielsweise für eine frei zu wählende Anzahl von äquidistanten Punkten P entlang eines Schnitts in Längsrichtung des Reifens.

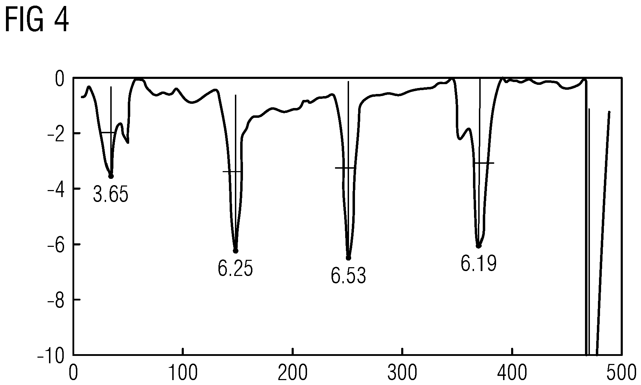

Innerhalb jedes dieser neuen Koordinatensysteme können nun für ausgesuchte Punkte der Punktwolke Schnitte in lateraler Richtung, d.h. in Breitenrichtung des Fahrzeugreifens, und/oder in longitudinaler Richtung, d.h. in Laufrichtung des Fahrzeugreifens, durchgeführt werden. Eine Schnittebene in lateraler Richtung, beispielsweise die in der Figur 2 mit 3 bezeichnete Schnittebene, wird dabei von den beiden Vektoren e1(P) und e2(P) aufgespannt, eine Schnittebene in longitudinaler Richtung, beispielsweise die in der Figur 2 mit 4 bezeichnete Schnittebene, wird von den beiden Vektoren e1(P) und e3(P) aufgespannt. In den Schnittebenen lassen sich die gesuchten Oberflächenstrukturinformationen schließlich aus eindimensionalen Funktionen ableiten, was für einen lateralen Schnitt exemplarisch in Figur 4 dargestellt ist. Hier lässt sich die Profiltiefe der einzelnen Profilrillen durch Analyse der lokalen Minima der dargestellten Funktion bestimmen.

### Bezugszeichenliste

- 1: Fahrzeugreifen
- 2: Rotationsachse
- 3: laterale Schnittebene
- 4: longitudinale Schnittebene

- 100: Schritt
- 101: Schritt
- 102: Schritt
- 102a: Hilfsschritt
- 102b: Hilfsschritt
- 102c: Hilfsschritt
- 103: Schritt
- 104: Schritt
- 105: Schritt

- n₁: Normalenvektor
- n₂: Normalenvektor
- V_{dist}: Abstandsvektor
- P₁: Punkt
- P₂: Punkt
- e1(P₁): Einheitsvektor
- e2(P₁): Einheitsvektor
- e3(P₁): Einheitsvektor

## Patentansprüche

1. Verfahren zur Vermessung von Oberflächenstrukturen eines Fahrzeugreifens (1), umfassend die folgenden Schritte:
- Aufnehmen eines Bildes eines Oberflächensegments eines Fahrzeugreifens (1) mit Hilfe eines 3D-Sensors,
- Generieren einer dreidimensionalen Punktwolke aus den von dem 3D-Sensor erfassten Bildpunkten des Oberflächensegments,
- Identifizieren der Lage der Rotationsachse (2) des Fahrzeugreifens (1) aus den Punkten P der Punktwolke, indem ein Richtungsvektor und ein Ortsvektor der Rotationsachse (2) bestimmt wird, wobei der Richtungsvektor der Rotationsachse (2) ermittelt wird, indem jedem Punkt P der Punktwolke ein Normalenvektor *n* zugeordnet wird und für einen angenommenen Richtungsvektor *r* die Summe seiner Skalarprodukte mit allen Normalenvektoren *n* gebildet wird, wobei der Richtungsvektor *r_{R}* der Rotationsachse (2) als derjenige Richtungsvektor *r* bestimmt wird, für den bei Variation des Richtungsvektors *r* die Summe der Skalarprodukte minimal wird, und wobei ein Ortsvektor *p* der Rotationsachse (2) als ein Vektor bestimmt wird, für den die Summe der Abstände zwischen den den Punkten der Punktwolke zugeordneten Normalenvektoren *n* und den Abstandvektoren *v_{dist}* dieser Punkte zur Rotationsachse (2) minimal wird,
- Transformieren der Koordinaten von Punkten P der Punktwolke von dem durch die Position des 3D-Sensors gegebenen Koordinatensystem in ein Koordinatensystem, welches gegeben ist durch den normierten Normalenvektor *e1(P)* im Punkt P, den normierten Richtungsvektor *e2(P)* der Rotationsachse (2) sowie einen auf diesen beiden Vektoren senkrecht stehenden Einheitsvektor *e3(P),*
- Durchführen von lateralen und/oder longitudinalen Schnitten für Punkte P der Punktwolke,
- Ableiten von Oberflächenstrukturinformationen aus eindimensionalen Funktionen in den sich ergebenden Schnittebenen (3, 4).

2. Verfahren nach Anspruch 1, **dadurch gekennzeichnet, dass** als 3D-Sensor eine Gesichtskamera eines Smartphones verwendet wird.

3. Verfahren nach Anspruch 2, **dadurch gekennzeichnet, dass** die Auswertung des mit der Gesichtskamera eines Smartphones aufgenommenen Bildes unmittelbar auf dem Smartphone erfolgt.

4. Verfahren nach Anspruch 3, **dadurch gekennzeichnet, dass** mindestens ein Ergebnis der Auswertung auf dem Display des Smartphones angezeigt wird.

5. Verfahren nach einem der Ansprüche 1 bis 4, **dadurch gekennzeichnet, dass** Informationen zur Profiltiefe des Fahrzeugreifens (1) abgeleitet werden.

6. Verfahren nach Anspruch 5, **dadurch gekennzeichnet, dass** durch Vergleich von Profiltiefenwerten entlang der Breite des Fahrzeugreifens (1) und/oder in Laufrichtung des Fahrzeugreifens (1) Informationen hinsichtlich eines ungleichmäßigen Abriebs des Fahrzeugreifens (1) abgeleitet werden.

7. Verfahren nach einem der Ansprüche 1 bis 6, **dadurch gekennzeichnet, dass** sich der zu vermessende Fahrzeugreifen (1) im montierten Zustand an einem Fahrzeug befindet.

8. Computerprogrammprodukt, das Codeanweisungen erhält, um die Schritte eines Verfahrens nach einem der Ansprüche 1 bis 7 auszuführen, wenn es auf einer Recheneinheit ausgeführt wird.
